# EUROPEAN PATENT APPLICATION

(11) **EP 3 660 342 A1**
(43) Date of publication of application: **03.06.2020**
(21) Application number: 18839072.8
(22) Date of filing: 24.04.2018
(51) Int. Cl.: F16C 19/18, F16C 33/32, F16C 33/58, F16H 48/08

(54) **DIFFERENTIAL FOR MOTOR VEHICLE AND TRANSMISSION FOR MOTOR VEHICLE**

(30) Priority: 24.07.2017 JP 2017143053
(71) Applicant: Nachi-Fujikoshi Corp., Tokyo 105-0021 (JP)
(72) Inventor: EJIRI, Yasuhiro, Toyama-shi Toyama 930-8511 (JP); KAWAI, Toshihiro, Toyama-shi Toyama 930-8511 (JP)
(74) Representative: Horn Kleimann Waitzhofer Patentanwälte PartG mbB
(86) International application number: PCT/JP2018/016578
(87) International publication number: WO 2019/021555

(57) **Abstract**

It is an object of the present invention to provide an automotive differential gear and an automotive transmission in which torque is suppressed while maintaining rigidity and a lifespan derived from a bearing. A typical configuration of an automotive differential gear 100 according to the present invention is characterized in that a double-row angular ball bearing (a bearing 130) having a plurality of rows of balls having the same ball diameter and the same pitch circle diameter is disposed at least on a ring gear 106 side of a final shaft 120 extending from the ring gear 106 side to a driving wheel side.

## Description

### FIELD OF THE INVENTION

The present invention relates to an automotive differential gear and an automotive transmission.

### BACKGROUND OF THE INVENTION

Both a differential gear and a transmission are important components in automobiles that transmit the rotational motion of an engine to driving wheels. In a differential gear and a transmission, a plurality of gears and shafts are combined in a complicated manner, and bearings are provided at various places. As such bearings, conventionally, highly rigid bearings, in particularly, tapered roller bearings have been empirically adopted. For example, in the differential gear disclosed in Patent Document 1, a side gear shaft 6 extending to a driving wheel side is supported by a tapered roller bearing 10 on the vehicle-left side, and supported by double-row oblique contact ball bearings (rolling bearings 11 and 21) on the vehicle-right side (hereinafter, the oblique contact ball bearing is referred to as an "angular ball bearing" in the present specification).

### RELATED DOCUMENTS

### PATENT DOCUMENTS

Patent Document 1: JP 2004-211855A

### SUMMARY OF THE INVENTION

### PROBLEMS TO BE SOLVED BY THE INVENTION

Tapered roller bearings often used in differential gears or the like are more rigid than ball bearings, but the fact that they generate large torque is a point of concern. If the torque of a bearing is reduced, fuel efficiency of an automobile is improved. However, tapered roller bearings have been widely used as bearings for differential gears and the like in order to ensure rigidity.

In view of such problems, an object of the present invention is to provide an automotive differential gear and an automotive transmission in which torque is suppressed while maintaining rigidity and the lifespan derived from a bearing.

### MEANS TO SOLVE THE PROBLEMS

In order to solve the above problems, the inventors of the present invention undertook intensive research. Usually, when replacing a tapered roller bearing with another bearing, a person skilled in the art is likely to select a tandem double-row angular ball bearing having a multi-stage configuration, in order to ensure axial rigidity. However, the research performed by the inventors of the present application has revealed that, in a tandem double-row angular ball bearing, the pitch circle diameter of one ball row needs to be made larger than the pitch circle diameter of the other ball row in order to make a multi-stage configuration. Also, it has been found that the pitch circle diameter of the ball row is a factor in determining the bearing size, and as a result, the size of the bearing may be increased. On the other hand, if double-row angular ball bearings in which the balls (in the two rows) have the same ball diameter and the same pitch circle diameter are used in the left and right rows, balls having a large diameter can be used even when the outer ring and the inner ring have the same dimensions, compared to the case of the multi-stage configuration. As a result, it has been found that the bearing size can be reduced and the load capacity can be improved. In other words, it has been found that a double-row angular ball bearing in which the balls have the same ball diameter and the same pitch circle diameter can ensure high capacity and high rigidity, despite being a ball bearing.

A typical configuration of an automotive differential gear according to the present invention is characterized in that a double-row angular ball bearing having a plurality of rows of balls having the same ball diameter and the same pitch circle diameter is disposed at least on a ring gear side of a final shaft extending from the ring gear side to a driving wheel side.

With the above configuration, by adopting a double-row angular ball bearing in which the balls have the same ball diameter and the same pitch circle diameter, torque can be reduced and fuel efficiency can be improved while maintaining the lifespan and rigidity, without changing the dimensions on the housing side and a shaft side.

In the above double-row angular ball bearing, when Ri represents the radius of curvature of the inner ring raceway groove and Bd represents the diameter of the balls, the groove R ratio (Ri/Bd) of the inner ring raceway groove preferably satisfies 0.515≤Ri/Bd. By satisfying the above condition, it is possible to reduce the contact area between the raceway groove and a ball and reduce the torque, and improve the fuel efficiency of the vehicle, while ensuring rigidity.

In order to solve the above problems, a typical configuration of an automotive transmission according to the present invention is characterized in that double-row angular ball bearings each having a plurality of rows of balls having the same ball diameter and the same pitch circle diameter are respectively disposed on two sides of the shaft a final gear connected to a driving wheel.

The above description corresponding to the technical idea of an automotive differential gear can also be applied to an automotive transmission. Therefore, also in the above configuration, it is possible to reduce the torque and improve the fuel efficiency while maintaining the lifespan and rigidity, without changing the dimensions on the housing side and a shaft side, by disposing double-row angular ball bearings in which the balls have the same ball diameter and the same pitch circle diameter at locations where tapered roller bearings are conventionally disposed.

In the above double-row angular ball bearings, when Ri represents the radius of curvature of the inner ring raceway groove and Bd represents the diameter of the balls, the groove R ratio (Ri/Bd) of the inner ring raceway groove preferably satisfies 0.515≤Ri/Bd. By satisfying the above condition, it is possible to reduce the contact area between the raceway groove and a ball and reduce the torque, and improve the fuel efficiency of the vehicle, while ensuring rigidity.

### EFFECTS OF THE INVENTION

According to the present invention, it is possible to provide an automotive differential gear and an automotive transmission in which torque is reduced while maintaining rigidity and the lifespan derived from a bearing.

### BRIEF EXPLANATION OF THE DRAWINGS

FIG. 1 is a diagram showing an automotive differential gear according to an embodiment of the present invention.
FIG. 2 is a diagram showing an automotive transmission according to the embodiment of the present invention.
FIG. 3 is a diagram of the results of a test in which a double-row angular ball bearing of the embodiment is compared with bearings of other comparative examples.

### INDEX TO THE REFERENCE NUMERALS

100 ... differential gear; 102 ... housing; 104 ... drive pinion gear; 106 ... ring gear; 108 ... pinion shaft; 110 ... differential case; 112 ... differential pinion gear; 116 ... left side-gear; 118 ... right side-gear; 120 ... left final-shaft; 122 ... right final-shaft; 130 ... bearing, which is double-row angular ball bearing; 132 ... right bearing; 134 ... inner ring; 136 ... outer ring; 138, 140 ... ball; 150 ... transmission; 152 ... input shaft; 154 ... output shaft; 156 ... final gear; 158 ... differential shaft; 160 ... reverse idle gear; 162 ... left bearing; 162 ... right bearing; 170 ... bearing in embodiment; 10 ... bearing in comparative example 1; 12 ... bearing in comparative example 2

### DESCRIPTION OF EMBODIMENTS

Hereinafter, a preferred embodiment of the present invention will be described in detail with reference to the accompanying drawings. The dimensions, materials, and other specific numerical values shown in the embodiment are merely examples for facilitating the understanding of the invention, and do not limit the present invention unless otherwise specified. In the present specification and drawings, elements having substantially the same function and configuration are denoted by the same reference numerals, and redundant description is omitted. Further, illustration and description not directly related to the present invention is omitted.

### Automotive differential gear

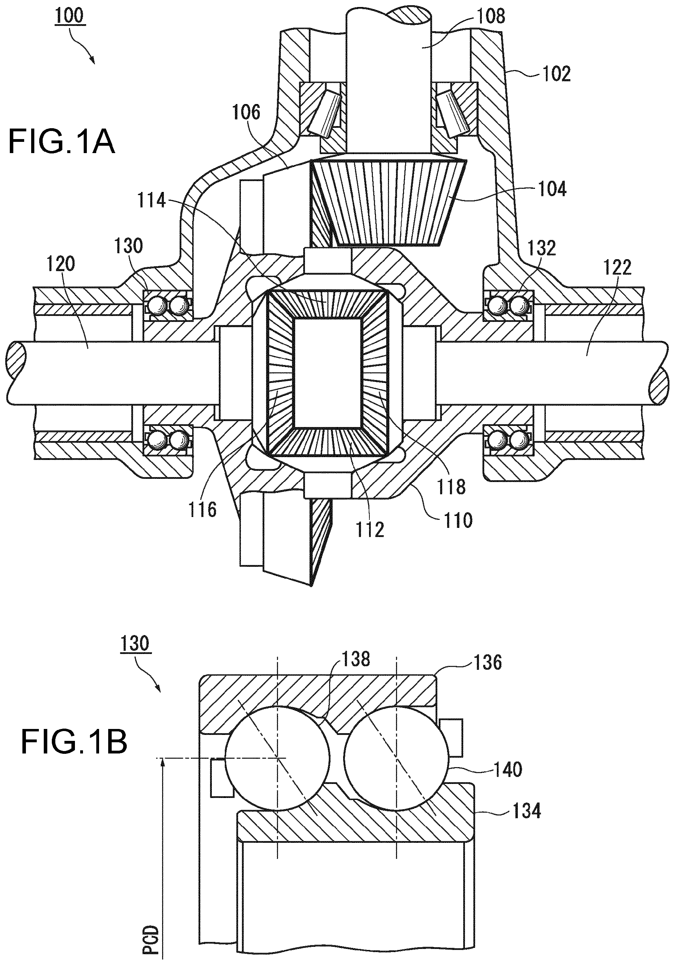

FIG. 1 is a diagram showing an automotive differential gear (hereinafter, a differential gear 100) according to an embodiment of the present invention. The differential gear 100 shown in FIG. 1A is a device that transmits power to driving wheels, and, also, absorbs the speed difference between the left and right driving wheels. The differential gear 100 includes a drive pinion gear 104 and a ring gear 106 inside a housing 102. The drive pinion gear 104 receives power from an engine through a propeller shaft (not shown) and a pinion shaft 108, and rotates the ring gear 106. The ring gear 106 is integrated with a differential case 110, and rotates together with the differential case 110. This rotational force is transmitted to the driving wheels through shafts (final shafts 120 and 122 described later).

In the present embodiment, the shafts extending from the center ring gear 106 side to left and right driving wheels are referred to as the final shafts 120 and 122. The final shafts 120 and 122 collectively represent shafts including side gear shafts directly connected to side gears 116 and 118 and drive shafts directly connected to the driving wheels.

The differential gear 100 supports the final shafts 120 and 122 using bearings 130 and 132, respectively. The bearings 130 and 132 rotatably support the differential case 110 and the final shafts 120 and 122, with respect to the housing 102. In this configuration, a double-row angular ball bearing is disposed as the bearing 130 that supports at least the ring gear 106 side of the final shaft 120. Conventionally, from the viewpoint of the lifespan, rigidity, and the like, a tapered roller bearing is disposed at this location. However, the present embodiment is characterized in that a double-row angular ball bearing is disposed at this location.

FIG. 1B is an enlarged view of the double-row angular ball bearing (the bearing 130) in FIG. 1A. The bearing 130, which is a double-row angular ball bearing, has two rows of balls 138 and 140 having a predetermined contact angle, between an inner ring 134 and an outer ring 136. In particular, in the present embodiment, the balls 138 and 140 have the same ball diameter and the same pitch circle diameter (hereinafter, referred to as PCD (pitch circle diameter)).

In general, a ball bearing in which a rolling element and a bearing ring are in point contact has lower torque than a tapered roller bearing in which a rolling element and a bearing ring are in line contact. In the differential gear 100, the double-row angular ball bearing in which the balls have the same ball diameter and the same PCD is disposed as the bearing 130 so that the torque can be reduced and the fuel consumption of the vehicle can be improved, as compared with a case in which the conventional tapered roller bearing is disposed.

In the present embodiment, consideration is also given to a decrease in rigidity, which is caused by replacing the tapered roller bearing with the ball bearing. A double-row angular ball bearing in which the balls have the same ball diameter and the same PCD has fewer limitations on securing the inner and outer ring thicknesses than a tandem angular ball bearing having a multi-stage configuration. Accordingly, balls having a large diameter can be used even if the overall size of the bearing remains the same. As a result, the double-row angular ball bearing (the bearing 130) included in the differential gear 100 has the same bearing size as a tapered roller bearing that is conventionally disposed, but high capacity and high rigidity are ensured despite being a ball bearing, by adopting the balls 138 and 140 with a large diameter inside the bearing 130.

From the above, in the differential gear 100, by disposing the double-row angular ball bearing (the bearing 130) in which the balls have the same ball diameter and the same PCD at the location where a tapered roller bearing is conventionally disposed, the torque can be reduced and the fuel consumption can be improved while maintaining rigidity, without changing the dimensions on the housing side and a shaft side.

### Automotive transmission

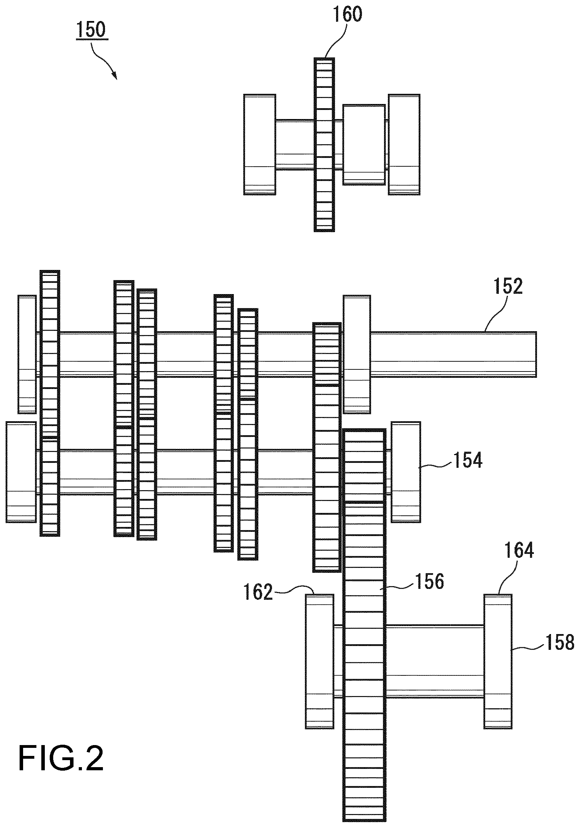

FIG. 2 is a diagram showing an automotive transmission (hereinafter, a transmission 150) according to the embodiment of the present invention. The transmission 150 is a mechanism that assumes a transaxle and the like used for a front-wheel drive vehicle (FF vehicle) in which a transmission and a differential gear are integrated. The transmission 150 transmits the power of the engine to the driving wheel while changing its torque, rotation speed, rotation direction, and the like. The transmission 150 includes a plurality of gears and shafts. As an overview, the transmission 150 includes an input shaft 152 that receives power from the engine via a clutch, an output shaft 154 that receives power from the input shaft 152 via the gears, a differential shaft 158 that transmits the power from the output shaft 154 to the driving wheel via the final gear 156, and the like. In addition, the transmission 150 also includes, for example, a reverse idle gear 160 used for driving the vehicle in reverse.

In the transmission, on the differential shaft 158 connected to a driving wheel, double-row angular ball bearings are respectively disposed on two sides of the final gear 156, as bearings 162 and 164. These bearings 162 and 164 have the same configuration as the bearing 130 that is a double-row angular ball bearing, which is described with reference to above FIG. 1A, and have two rows of balls having the same ball diameter and the same PCD, which have the predetermined contact angle. The transmission is also characterized in that double-row angular ball bearings in which the balls have the same ball diameter and the same PCD are disposed at locations where tapered roller bearings are conventionally disposed.

Also, in the transmission, by disposing double-row angular ball bearings (the bearings 162 and 164) in which the balls have the same ball diameter and the same PCD, the torque can be reduced and the fuel consumption of the vehicle can be improved, as compared with the case where the conventional tapered roller bearings are disposed. Also, by disposing double-row angular ball bearings (the bearings 162 and 164) in which the balls have the same ball diameter and the same PCD, it is possible to adopt balls with a large diameter inside the double-row angular ball bearings, and compensate for the reduction in rigidity, which is caused by replacing the tapered roller bearings that are conventionally used.

From the above, also in the transmission 150, by disposing double-row angular ball bearings (the bearings 162 and 164) in which the balls have the same ball diameter and the same PCD at locations where tapered roller bearings are conventionally disposed, the torque can be reduced and the fuel consumption of the vehicle can be improved while ensuring high capacity and high rigidity, without changing the dimensions on the housing side and a shaft side.

### Performance of double-row angular ball bearing

Both the differential gear 100 and the transmission 150 described above employ a double-row angular ball bearing in which the balls have the same ball diameter and the same PCD, which not only improves fuel consumption but also increases the lifespan.

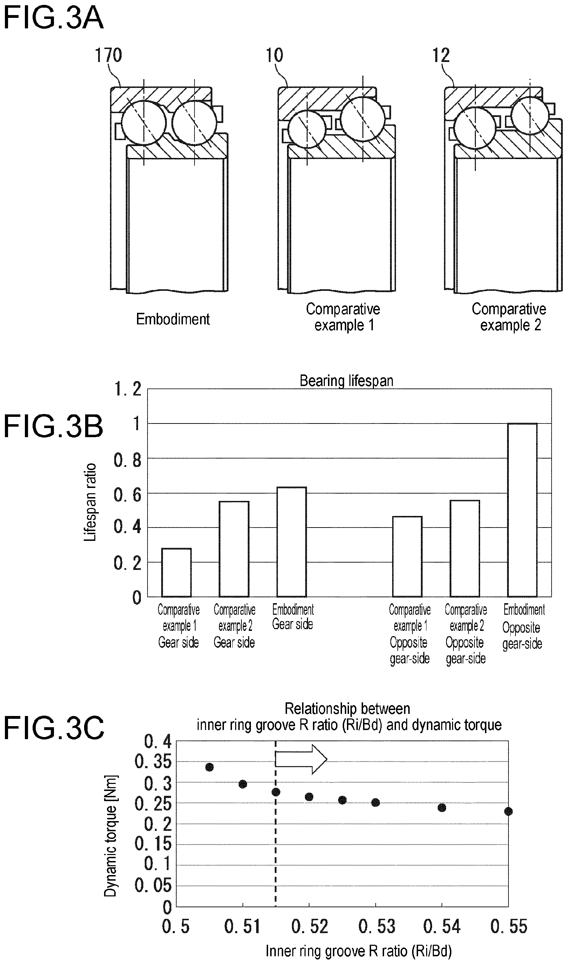

FIG. 3 is a diagram of the results of a test in which a double-row angular ball bearing of the embodiment is compared with bearings of other comparative examples. FIG. 3A is a diagram in which test objects are arranged. In order from the left side, a double-row angular ball bearing (a ball bearing 170) in which the balls have the same ball diameter and the same PCD, which is used in the embodiment, a tandem angular ball bearing (a ball bearing 10) in which the left and right balls have different diameters and different PCDs acting as a comparative example 1, and a tandem angular ball bearing (a ball bearing 12) in which the left and right balls have different diameters and different PCDs acting as a comparative example 2 are shown. The bearing 10 of the comparative example 1 has small-diameter balls disposed on the raceway on the small-diameter side between the two rows, and the bearing 12 of the comparative example 2 has small-diameter balls disposed on the raceway on the large-diameter side between the two rows. The bearing 170 according to the embodiment has the same configuration as the bearing 130 shown in FIG. 1B, and the bearings 162 and 164 shown in FIG. 2, and the bearing 170 is shown as a representative of them.

FIG. 3B shows the results of the lifespan test performed on the test objects in FIG. 3A. The comparative example 1 (the bearing 10), the comparative example 2 (the bearing 12), and the embodiment (the bearing 170) are arranged in this order on the horizontal axis. The vertical axis shows the lifespan ratio. The test was performed assuming that the bearings to be tested are arranged at the locations of the bearings 162 and 164 of the transmission 150 in FIG. 2. On the horizontal axis, the gear side is the position of the bearing 162 close to the final gear 156 in FIG. 2, and opposite gear-side is the position of the bearing 164 away from the final gear 156.

In the lifespan ratio shown as the test results, the ratio of the test object on the side opposite gear-side of the embodiment shown in the left end of the horizontal axis is set to 1. From FIG. 3B, it can be confirmed that the test objects on the gear side are more susceptible to a load than the test objects on the opposite gear-side and have a shorter lifespan. Also, in both the gear side and the opposite gear-side, it can be confirmed that the test objects of the embodiment have the longest life. This is presumably because the double-row angular ball bearing (the bearing 170) in which the balls have the same PCD can use balls having a larger diameter than the tandem double-row angular ball bearings of the comparative examples, even if the outer ring and the inner ring have the same dimensions, which leads to an improvement in load capacity. Further, in the tandem double-row angular ball bearings in the comparative examples, the diameter of the balls on one side need to be made smaller than the diameter of the balls on the other side, in order to make a multi-stage configuration. For this reason, it is considered that the load capacity of the left and right rows cannot be maximized, and as a result, the lifespan is reduced.

Normally, when replacing a tapered roller bearing with another bearing, a person skilled in the art is likely to select a tandem double-row angular ball bearing having a multi-stage configuration, in order to ensure axial rigidity. However, in the above differential gear 100 and the transmission 150, the double-row angular ball bearings (the bearing 130 and the bearings 162 and 164) in which the balls have the same ball diameter and the same PCD are selected, based on the above test results. Therefore, with the differential gear 100 and the transmission 150, not only the torque can be reduced and the rigidity can be secured, but also the lifespan can be increased.

In the present embodiment, further contrivances were made for reducing torque. Specifically, in the double-row angular ball bearings in which the balls have the same ball diameter and the same PCD, which are adopted as bearings in the above embodiment, when Ri represents the radius of curvature of the raceway groove of the inner ring and Bd represents the diameter of the ball, the groove R ratio (Ri/Bd) of the raceway groove is set to satisfy the condition of 0.515≤Ri/Bd.

FIG. 3C is a diagram showing the result of tests relating to the groove R ratio of the inner ring and the dynamic torque. In FIG. 3C, the horizontal axis shows the groove R ratio (Ri/Bd) of the inner ring, and the vertical axis shows the dynamic torque (Nm). As shown in FIG. 3C, it can be seen that the double-row angular ball bearing has sufficiently small dynamic torque, when the groove R ratio is 0.515 or more. This is because, as the groove R ratio increases, that is, as the radius of curvature Ri of the raceway groove increases, the contact area between the raceway groove and the ball also decreases.

Normally, if the contact area between the raceway groove and the ball is small, the rigidity of the bearing is reduced. However, in a double-row angular ball bearing, as mentioned above, the rigidity is ensured by adopting balls with a large diameter, and also the dynamic torque is reduced and the fuel consumption of the vehicle is improved by setting the groove R ratio of the inner ring to 0.515 or more. With this configuration, in the present embodiment, both an improvement in fuel consumption of the vehicle due to a reduction in dynamic torque of the double-row angular ball bearings and a reduction in displacement of the final shaft 120 (see FIG. 1A) and the differential shaft 158 (see FIG. 2) due to the rigidity of the double-row angular ball bearings being ensured are achieved.

Although a preferable embodiment of the present invention has been described above with reference to the attached drawings, it goes without saying that the present invention is not limited to the above-described examples. It is apparent that a person skilled in the art may conceive various modifications and variations within the scope of the appended patent claims, and those modifications and variations should be understood to be naturally encompassed in the technical scope of the present invention.

### INDUSTRIAL APPLICABILITY

The present invention can be used for an automotive differential gear and an automotive transmission.

## Claims

1. An automotive differential gear,
wherein a double-row angular ball bearing having a plurality of rows of balls having the same ball diameter and the same pitch circle diameter is disposed at least on a ring gear side of a final shaft extending from the ring gear side to a driving wheel side.

2. The automotive differential gear according to claim 1,
wherein, in the double-row angular ball bearing,
when Ri represents the radius of curvature of a raceway groove of the inner ring, and Bd represents the diameter of the balls,
the groove R ratio (Ri/Bd) of the raceway groove of the inner ring satisfies 0.515≤Ri/Bd.

3. An automotive transmission,
wherein double-row angular ball bearings each having a plurality of rows of balls having the same ball diameter and the same pitch circle diameter are respectively disposed on two sides of the shaft of a final gear connected to a driving wheel.

4. The automotive transmission according to claim 3,
wherein, in the double-row angular ball bearings,
when Ri represents the radius of curvature of a raceway groove of the inner ring, and Bd represents the diameter of the balls,
the groove R ratio (Ri/Bd) of the raceway groove of the inner ring satisfies 0.515≤Ri/Bd.
